# EUROPÄISCHE PATENTSCHRIFT

(11) **EP 2 526 313 B1**
(45) Veröffentlichungstag und Bekanntmachung des Hinweises auf die Patenterteilung: **18.03.2015**
(21) Anmeldenummer: 11700837.5
(22) Anmeldetag: 14.01.2011
(51) Int. Cl.: F16C 41/00, F16D 49/20, F16D 65/14

(54) **BREMSBARES LAGER**
BEARING CAPABLE OF BEING BRAKED
PALIER FREINABLE

(30) Priorität: 21.01.2010 DE 102010005210
(43) Veröffentlichungstag der Anmeldung: 28.11.2012
(73) Patentinhaber: Schaeffler Technologies AG & Co. KG, 91074 Herzogenaurach (DE)
(72) Erfinder: FLEISCHER, Michael, 91187 Mühlstetten (DE); ZEISBERGER, Frank, 90579 Langenzenn (DE)
(86) Internationale Anmeldenummer: PCT/EP2011/050443
(87) Internationale Veröffentlichungsnummer: WO 2011/089068

(56) Entgegenhaltungen:
- EP-A2- 1 832 764
- WO-A1-2008/095460
- DE-B- 1 904 954

## Beschreibung

### Gebiet der Erfindung

Die Erfindung betrifft ein bremsbares Lager nach dem Oberbegriff von Anspruch 1, welches aus der WO 2008/095460 A1 oder der DE 199 17 498 A1 bekannt ist.

Aus der Praxis ist die Forderung bekannt, eine sich drehende Welle ggf. schnell abbremsen zu können, um beispielsweise eine Not-Aus-Funktion zu ermöglichen. Eine derartige Forderung tritt beispielsweise bei Lagern für Werkzeug-, Textil- oder Produktionsmaschinen bzw. bei Motoren auf.

Aus dem Stand der Technik sind bremsbare Lager bekannt, bei denen eine einstellbare Reibung zwischen dem sich drehenden der beiden Lagerringe und einem weiteren Lagerbestandteil, beispielsweise den anderen der beiden Lagerringe, möglich ist.

DE 199 17 498 A1 beschreibt ein Lager mit einem ersten und einem zweiten Lagerring, wobei an einem der beiden Lagerringe an dessen Stirnfläche ein erster Bremsbelag vorgesehen ist, und in einem axialen Abstand zu der Stirnfläche ein Zusatzring vorgesehen ist, an dem ein zweiter Bremsbelag, der auf den ersten Bremsbelag weist, angeordnet ist. An dem anderen Lagerring ist eine Hydraulikvorrichtung vorgesehen, die einen Kolben betätigt, der über die Verlängerung des Spaltes zwischen den beiden Lagerringen hinweg der eine Bremsfläche radial verschiebt, so dass die Bremsfläche zugleich mit den beiden Bremsbelägen in Kontakt kommt und ein einstellbares Abbremsen der beiden Lagerringe zueinander möglich ist. Die Hydraulikvorrichtung lenkt dabei die radial wirkende Bremskraft um 90°, also in die axiale Richtung, um. Ein derartiger Aufbau erfordert einen hohen Bauraum außerhalb des Lagers, spricht im Hinblick auf eine Not-Aus-Funktion nur sehr langsam an und ist aufgrund der Umlenkung der Bremskraft der Hydraulikvorrichtung um 90° energetisch ungünstig.

DE 10 2007 003 470 A1 beschreibt ein Lager mit zwei Lagerringen und einem Lagerkäfig, wobei an einer Stirnseite des Lagerkäfigs eine erste Bremsfläche vorgesehen ist, die mit einer zweiten Bremsfläche, die an einer axialen, den Lagerspalt übergreifenden Verlängerung eines der beiden Lagerringe angeordnet ist, zusammenwirkt. Um die Bremskraft einstellen zu können, ist ein Schraubgewinde vorgesehen, das gegen die Vorspannung einer Tellerfeder die zweite Bremsfläche in axialer Richtung gegen die erste, an dem Käfig befestigte Bremsfläche drückt. Dieser Aufbau erfordert ebenfalls einen hohen Platz außerhalb des Lagers, insbesondere in axialer Richtung. Weiter spricht die Vorrichtung im Hinblick auf eine Not-Aus-Funktion nur sehr langsam an, da das Schraubgewinde mehrfach gedreht werden muss, um eine maximale Bremsfunktion bieten zu können. Nachteilig ist weiter, dass der Lagerkäfig mechanisch stark beansprucht wird, da die erste Bremsfläche an dessen Stirnfläche angeordnet ist, so dass auch die Laufeigenschaften der Wälzkörper und damit die Funktion des Lagers insgesamt im Fall einer starken, plötzlichen Betätigung der beiden Bremsflächen gefährdet sein kann.
DE 37 25 972 C2 beschreibt ein Lager mit einem drehend angeordneten Lagerring, an dessen Stirnfläche ein erster Bremsbelag angeordnet ist, der mit einem zweiten, an einem Gehäuse angeordneten Bremsbelag zusammenwirkt. Hierzu weist der Lagerring eine axial sich erstreckende, ein Gewinde aufweisende Innenbohrung auf, durch die ein Bolzen geführt ist, dessen Drehen die beiden Bremsbeläge aneinander drückt. Auch dieses Lager spricht nur sehr langsam an, wenn der sich drehende Lagerring in sehr kurzer Zeit stillstehen soll.

EP 1 170 518 B1 beschreibt ein Lager mit einem ersten Lagerring und einem zweiten Lagerring, wobei eine Verriegelungseinrichtung vorgesehen ist, mit der die relative Drehung der beiden Lagerringe unterbunden werden kann, wobei die Verriegelungseinrichtung ein an dem einen der beiden Lagerringe angeordnetes Formschlusselement umfasst, das die beiden Lagerringe formschlüssig miteinander verbindet. Das Formschlusselement kann eine Verzahnung oder einen Bolzen umfassen, die mit einer Gegenverzahnung bzw. einer Bolzenaufnahme an dem anderen Lagerring zusammenwirkt. Das Lager lässt sich, sofern es bereits stillsteht, festlegen, nicht jedoch aus der Drehung heraus abbremsen.

US 5,232,072 A beschreibt ein Lager mit einem ersten Lagerring und einem zweiten Lagerring, wobei an der Stirnfläche des ersten Lagerrings ein erster Bremsbelag und an einer Lageraufnahme, in einem axialen Abstand zu der Stirnfläche, ein zweiter Bremsbelag angeordnet ist. An dem zweiten Lagerring ist eine Betätigungseinrichtung vorgesehen, bei der ein Kolben in radialer Richtung über den Lagerspalt hinweg geführt ist, wobei der Kolben zwei angeschrägte Flächen aufweist, die mit komplementär angeschrägten Flächen eines axial verschieblichen Stellelementes zusammen wirken, so dass das Stellelement eine flächige Pressung mit den beiden Bremsbelägen erfährt, die abhängig von der Betätigung der Betätigungseinrichtung ist. Die angeschrägten Flächen des Kolben bzw. des Stellelementes bewirken eine Umlenkung der Bremskraft von der radialen in die axiale Richtung. Ungünstig ist hier der Platzbedarf in axialer Richtung, auf der Stirnfläche des ersten Lagerrings aufliegend, sowie die im Notfall nur langsame Ansprechzeit des Lagers.

### Aufgabe der Erfindung

Es ist die Aufgabe der Erfindung, ein schnell ansprechendes abbremsbares Lager anzugeben, das einen nur geringen Bauraum beansprucht.

### Zusammenfassung der Erfindung

Diese Aufgabe wird für das eingangs genannte Lager erfindungsgemäß mit den Merkmalen des Anspruchs 1 gelöst durch eine Rampe an dem zweiten Lagerring, die in Richtung auf den ersten Lagerring mindestens abschnittsweise vorsteht, und ein betätigbares Keilelement, das zwischen die Rampe und den ersten Lagerring bringbar ist, und das in der betätigten Stellung den Spalt zwischen der Rampe und dem ersten Lagerring überbrückt.

Das Keilelement ist dabei zwischen einer Ruhestellung, in der es keinen Kontakt zu der Rampe aufweist und einer betätigten Stellung, in der das Keilelement einen Kontakt mit der Rampe hat, bewegbar. Bei der Betätigung des Keilelementes kommt es zu einem Kontakt mit einem Flächenabschnitt der Rampe, wobei die Drehung des einen Lagerrings das Keilelement so lange in Drehrichtung führt, bis der Spalt zwischen der Rampe und dem ersten Lagerring überbrückt, insbesondere durch das Keilelement mindestens abschnittsweise ausgefüllt ist, dass das Keilelement eine Flächenpressung zwischen einem Flächenabschnitt der Rampe und einem Flächenabschnitt des ersten Lagerrings vermittelt. Dabei entsteht eine im wesentlichen radial, also senkrecht zu der Lagerdrehachse, wirkende Bremskraft, die die Drehung der beiden Lagerringe relativ zu einander unterdrückt.
Das Keilelement bewegt sich, sobald ein Reibkontakt mit einem Abschnitt der Rampe und einem Abschnitt des ersten Lagerrings hergestellt ist, so lange an der Rampe entlang, bis die Flächenpressung ausreicht, um den ersten Lagerring in seiner Drehbewegung möglichst stark abzubremsen, so dass es zu einer selbstverstärkenden Wirkung der Bremskraft kommt, sobald das Keilelement betätigt ist, also aus der Ruhestellung bewegt wird. Es resultiert eine sehr schnell ansprechende Bremskraft, die, da sie im wesentlichen radial wirkt, eine nur geringe bauliche Veränderung des Lagers in axialer Richtung, also in Richtung der Lagerdrehachse, erforderlich macht.

Weiter erweist sich als Vorteil, dass das Keilelement in seiner Ruhestellung keine Bremswirkung entfaltet, da kein Kontakt zu dem zweiten Lagerring mit der Rampe besteht, so dass die Drehung der beiden Lagerringe relativ zueinander nicht beeinträchtigt wird.

Vorzugsweise ist vorgesehen, dass das Keilelement an einem Schaltteller angeordnet ist, und dass der Schaltteller um die Lagerachse drehbar gelagert ist. Das Keilelement lässt sich durch ein Drehen des Schalttellers, insbesondere bereits durch ein Verschwenken des Schalttellers um einen nur geringen Winkel, auslösen und in die betätigte Stellung verbringen. Eine derartige Anordnung weist eine nur geringe Ansprechzeit auf und lässt sich auch elektronisch bzw. mechanisch leicht auslösen bzw. ansteuern. Der Schaltteller bietet die Möglichkeit, das Keilelement in der Ruhestellung definiert zu halten, beispielsweise mechanisch mittels Federn, die an dem Schaltteller angreifen, so dass das Keilelement nicht versehentlich betätigt wird.

Hinsichtlich der Ausbildung des Schalttellers ist vorzugsweise vorgesehen, dass das Keilelement von einem Tellerteil des Schalttellers in Richtung der Lagerachse absteht. Das Tellerteil erstreckt sich dabei im wesentlichen radial, also senkrecht zu der Lagerdrehachse, und deckt den Spalt zwischen den beiden Lagerringen zumindest teilweise ab. Das Keilelement weist dabei eine axiale Erstreckung auf, so dass das Keilelement flächig ausgestaltet sein kann, um eine möglichst hohe Flächenpressung mit der Rampe bzw. dem ersten Lagerring in der betätigten Stellung auszubilden.

Vorzugsweise ist vorgesehen, dass das Keilelement an einer zu dem ersten Lagerring weisenden Fläche abschnittsweise eine hohlzylindrische Teilkontur aufweist. Das Keilelement bietet damit insbesondere eine zu der Mantelfläche des ersten Lagerrings komplementäre Kontur, so dass in der betätigten Stellung des Keilelementes eine reibschlüssiger Kontakt über eine hohe gemeinsame Kontaktfläche zwischen der hohlzylindrischen Teilkontur und einem Flächenabschnitt der Mantelfläche des ersten Lagerrings auftritt. Es ist insbesondere möglich, dass das Keilelement im Bereich der hohlzylindrischen Teilkontur an dem ersten Lagerring zumindest abschnittsweise unmittelbar anliegt, so dass sich der erste Lagerring beispielsweise unter dem Keilelement hinweg um die Lagerdrehachse drehen kann, während das Keilelement in der Ruhestellung gehalten ist. In der betätigten Stellung des Keilelementes wird dann die erforderliche Flächenpressung zu dem ersten Lagerring sehr schnell ausgebildet, so dass eine nur kurze Ansprechzeit auftritt, bis die beiden Lagerringe relativ zueinander abgebremst sind bzw. stillstehen.

Vorzugsweise ist vorgesehen, dass das Keilelement eine abschnittsweise zu einer Umfangskontur der Rampe formschlüssige Gegenkontur aufweist. Die Umfangskontur der Rampe kann bei Bedarf als Anschlag für das Keilelement ausgebildet sein. Weiter kann die Umfangskontur so gestaltet werden, dass die Bremskraft umso stärker wird, je weiter das Keilelement auf die Rampe aufgefahren ist. In der betätigten Stellung des Keilelementes verteilt sich die Flächenpressung auf beide Lagerringe gleichmäßig über eine möglichst große Fläche, so dass die bei der schnellen Abbremsung auftretenden hohen Kräfte in insbesondere radialer Richtung von beiden Lagerringen aufgenommen werden können.

Vorzugsweise ist vorgesehen, dass ein Keilwinkel der Rampe im Umfangsrichtung des zweiten Lagerrings zunimmt. Damit verengt sich der Spalt zwischen der Rampe und dem Keilelement in Umfangsrichtung, so dass sich die Bremskraft verstärkt, wenn die Umfangsrichtung mit der relativen Drehrichtung der beiden Lagerringe um die gemeinsame Lagerdrehachse übereinstimmt. Der Keilwinkel ist dabei der Winkel zwischen einer (ggf. gedachten) Verlängerung des kreisförmigen Umfangs des zweiten Lagerrings und einer Tangente an einen Punkt an der zu dem ersten Lagerring weisenden Fläche der Rampe in einer Ebene, auf der die Lagerdrehachse senkrecht steht.

Vorzugsweise ist vorgesehen, dass die Rampe abschnittsweise eine kreisbogensegmentförmige Umfangskontur aufweist. Der gedachte Mittelpunkt des Kreises des Kreisbogensegmentes ist dabei bezogen auf die Lagerdrehachse in radialer Richtung verschoben. Eine mindestens abschnittsweise kreisbogensegmentförmige Umfangskontur lässt sich leicht herstellen, bietet einen in Umfangsrichtung zunehmen Keilwinkel und ermöglicht eine einfache Ausbildung einer formschlüssigen Gegenkontur an dem Keilelement.

Vorzugsweise ist vorgesehen, dass die Rampe einteilig mit dem zweiten Lagerring ausgebildet ist. Auf diese Weise lassen sich die bei der schnellen Abbremsung auftretenden Kräfte leicht in das Korpus des zweiten Lagerrings übertragen und von dem Lager wegleiten.

Vorzugsweise ist für das Lager vorgesehen, dass das Lager weiter ein Dichtelement sowie Wälzkörper umfasst, wobei das Dichtelement zwischen dem Keilelement und dem Wälzkörpern angeordnet ist. Das Dichtelement verhindert das Austreten von Abrieb in den Bereich der Wälzkörper und von Schmiermittel in den Bereich zwischen dem Keilelement und der Rampe.

Weitere Vorteile und Merkmale der Erfindung ergeben sich aus den abhängigen Ansprüchen sowie aus der Beschreibung eines bevorzugten Ausführungsbeispiels.

Die Erfindung wird im folgenden unter Bezugnahme auf die anliegenden Zeichnungen anhand eines Ausführungsbeispiels näher beschrieben und erläutert.

### Kurze Beschreibung der Zeichnungen

- Fig. 1a: zeigt eine Schnittansicht eines Ausführungsbeispiels eines erfindungsgemäßen Lagers,
- Fig. 1b: zeigt eine Schnittansicht des Ausführungsbeispiels aus Fig. 1a in einer Schnittebene B-B,
- Fig. 2a: zeigt eine Schnittansicht des Ausführungsbeispiels aus Fig. 1a, b in einer ersten betätigten Stellung,
- Fig. 2b: zeigt eine Schnittansicht des Ausführungsbeispiels aus Fig. 1a, b, 2a in einer zweiten betätigten Stellung, und
- Fig. 3: zeigt eine ausschnittsweise Draufsicht eines weiteren Ausführungsbeispiels eines erfindungsgemäßen Lagers.

### Detaillierte Beschreibung der Zeichnungen

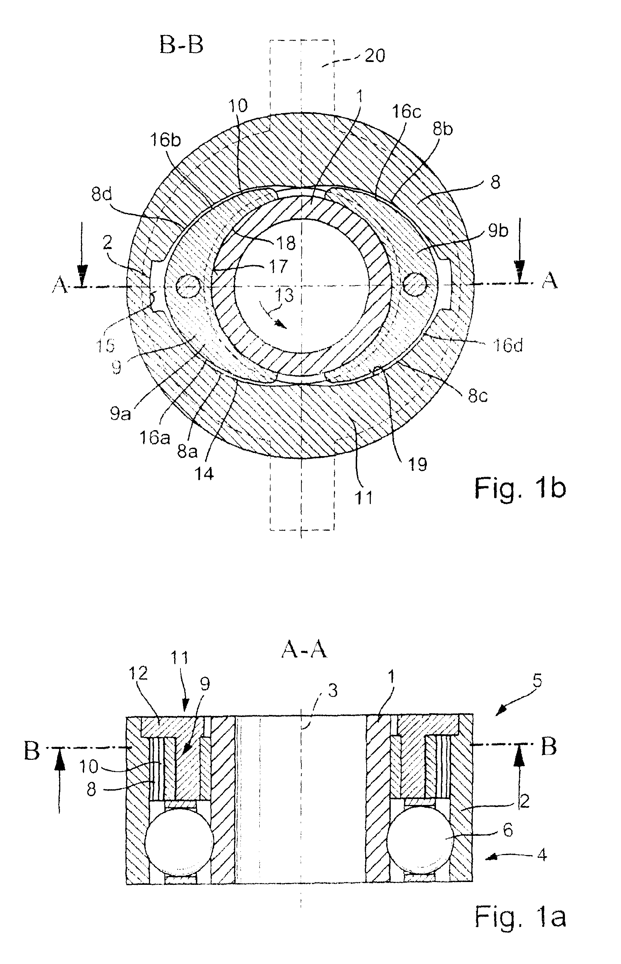

Fig. 1a zeigt ein Lager, das als bremsbares Lager, insbesondere als bremsbares Wälzlager, ausgestaltet ist, wobei das Lager einen ersten Lagerring 1 umfasst, der als Innenring des Wälzlager ausgebildet ist. Das Lager umfasst weiter einen zweiten Lagerring 2, der als Außenring des Wälzlagers ausgebildet ist, wobei der zweite Lagerring 2 konzentrisch zu dem ersten Lagerring 1 um eine gemeinsame Achse, nämlich die Lagerachse 3, angeordnet ist. Die Erstreckung der Lagerachse 3 definiert eine axiale Richtung, wobei eine radiale Richtung senkrecht auf der Lagerachse 3 steht.

In dem ersten Lagerring 1 ist drehfest eine Welle aufgenommen. Eine äußere Mantelfläche des zweiten Lagerrings 2 ist fest an einer bildlich nicht dargestellten Lageraufnahme angeordnet, so dass der erste Lagerring 1 bezüglich des zweiten Lagerrings 2 um die Lagerachse 3 drehbar ist und das Lager die Welle drehbar an der Lageraufnahme lagert.

Das Lager umfasst einen Lagerabschnitt 4 und einen axial beabstandeten Bremsabschnitt 5, wobei im Bereich des Lagerabschnittes 4 Wälzkörper 6 vorgesehen sind, so dass eine relative Drehung der beiden Lagerring 1, 2 möglich ist. Zwischen dem Lagerabschnitt 4 und dem Bremsabschnitt 5 ist ein Dichtelement 7 angeordnet, das den Lagerabschnitt 4 mit den Wälzkörpern 6 gegenüber dem Bremsabschnitt 5 abdichtet und beispielsweise verhindert, dass Partikel, insbesondere bei einem Abbremsen des Lagers auftretender Abrieb, aus dem Bremsabschnitt 5 in den Lagerabschnitt 4 gelangt und die Funktion des Lagers beeinträchtigen kann.

Die axiale Erstreckung, also die Erstreckung des Lagers in Richtung der Lagerachse 3, teilt sich etwa hälftig auf den Lagerabschnitt 4 und den Bremsabschnitt 5 auf, so dass das Lager, das als einreihiges Kugellager ausgebildet ist, in axialer Richtung im wesentlichen nur den Platz eines zweireihigen Kugellagers beansprucht, so dass eine baulich kompakte Ausgestaltung des bremsbaren Lagers gegeben ist.

In dem Bereich des Bremsabschnittes 5 ist an dem zweiten Lagerring 2 an dessen auf den ersten Lagerring 1 weisenden inneren Mantelfläche eine Rampe 8 befestigt. Die Rampe 8 steht in Richtung auf den ersten Lagerring 1 vor und ist einteilig mit dem zweiten Lagerring 2 ausgebildet, insbesondere als mit dem Material des Korpus des zweiten Lagerrings 2 materialschlüssige, in radialer Richtung vorstehende Verprägung des zweiten Lagerrings 2 ausgestaltet.

Zwischen den beiden Lagerringen 1, 2 ist ein Keilelement 9 angeordnet, das in der in Fig. 1a, b dargestellten Ruhestellung einen Spalt 10 zu der Rampe 8 an dem zweiten Lagerring 2 belässt. Das Keilelement 9 ist an einem Schaltteller 11 angeordnet, wobei der Schaltteller 11 um die Lagerachse 3 drehbar angeordnet ist. Der Schaltteller 11 schließt im wesentlichen bündig mit den beiden Stirnflächen der beiden Lagerringe 1, 2 ab, so dass der Schaltteller 11 axial nicht über das Lager vorsteht. Der Schaltteller 11 umfasst weiter ein im wesentlichen radial sich erstreckendes Tellerteil 12, das den Spalt 10 zwischen der Rampe 8 bzw. dem zweiten Lagerring 2 und dem ersten Lagerring 1 überdeckt und ein Eindringen von Partikeln in den Spalt 10 zwischen der Rampe 8 und dem Keilelement 9 bzw. zwischen dem ersten Lagerring 1 und dem zweiten Lagerring 2 im Bereich des Bremsabschnittes 5 verhindert.

Fig. 1b zeigt das Ausführungsbeispiel aus Fig. 1a in einer Draufsicht, entlang der Schnittlinie B-B in Fig. 1a. Es ist erkennbar, dass insgesamt vier Rampen 8 vorgesehen sind, wobei sich die jeweilige Rampe 8 um etwas weniger als ca. 90° entlang des Umfangs der inneren Mantelfläche des zweiten Lagerrings 2 erstreckt. Bezogen auf eine Drehrichtung gemäß Pfeil 13 um die Lagerachse 3 liegen sich zwei gleichartig ausgestaltete Rampen 8a, 8b bezogen auf die Lagerachse 3 diametral gegenüber. Bezogen auf eine Drehrichtung entgegen der des Pfeils 13 liegen sich ebenfalls zwei Rampen 8c, 8d bezogen auf die Lagerachse 3 diametral gegenüber. Die einzelnen Rampen 8a, 8b, 8c und 8d sind gleichartig ausgestaltet, so dass im folgenden nur eine der Rampen als Rampe 8 näher beschrieben ist.

Die Rampe 8 weist entlang ihrer Erstreckung in Umfangsrichtung (Pfeil 13) des zweiten Lagerrings 2 eine kreisbogensegmentförmige Umfangskontur 14 auf. Der Mittelpunkt des Kreises, dessen Kreisbogensegment die Umfangskontur 14 begrenzt, ist bezogen auf die Lagerachse 3 radial versetzt. Ein Keilwinkel, also ein Winkel, den eine Tangente an die Umfangskontur 14 im Bereich der Rampe 8 mit einer gedachten Verlängerung der kreisförmigen Kontur der inneren Mantelfläche 15 des ersten Lagerrings 2 einschließt, nimmt bezogen auf die Pfeilrichtung 13 für die Rampen 8a, 8b in Umfangsrichtung zu.

Das Keilelement 9 umfasst zwei einzelne Teil-Keilelemente 9a, 9b, die bezogen auf die Lagerachse 3 diametral gegenüberliegend und symmetrisch an dem Tellerelement 12 angeordnet sind. Jedes der beiden Teil-Keilelemente 9a, 9b weist einen in Umfangsrichtung radial auf den zweiten Lagerring 2, insbesondere die Rampe 8 hin verlaufenden Flächenabschnitt auf.
Das erste Teil-Keilelement 9a weist einen ersten Flächenabschnitt 16a auf, der mit der ersten Rampe 8a zusammenwirkt, und das zweite Teil-Keilelement 9b einen ersten Flächenabschnitt 16c, der mit der zweiten Rampe 8b zusammenwirkt. Bei der Betätigung des Keilelementes 9 kommen die beiden ersten Flächenabschnitte 16a, 16c gleichzeitig mit den beiden Rampen 8a, 8b in Kontakt. Das erste Teil-Keilelement 9a weist einen zweiten Flächenabschnitt 16b auf, der mit der Rampe 8d zusammenwirkt, und das zweite Teil-Keilelement 9b einen zweiten Flächenabschnitt 16d, der mit der Rampe 8c zusammenwirkt. Bei der Betätigung des Keilelementes 9 kommen die beiden zweiten Flächenabschnitte 16b, 16d gleichzeitig mit den Rampen 8d, 8c in Berührung.

Die beiden Teil-Keilelemente 9a, 9b sind gleichartig aufgebaut, so dass im folgenden nur eines als Keilelement 9 beschrieben wird. Das Keilelement 9 weist dabei an einer zu dem ersten Lagerring 1 weisenden Fläche 17 eine abschnittsweise hohlzylindrische Teilkontur 18 auf, so dass im wesentlichen flächige Anlage des ersten Lagerrings 1 an das Keilelement 9, insbesondere an jedes der beiden Teil-Keilelemente 9a, 9b, möglich ist. In der in Fig. 1 b dargestellten Ruhestellung des Keilelementes 9 dreht sich der erste Lagerring 1 mit seiner äußeren Mantelfläche unter der Teilkontur 18 des Keilelementes 9 hinweg, so dass nur ein Gleitkontakt zwischen dem ersten Lagerring 1 und dem Keilelement 9 auftritt.

Auf der zu der Rampe 8 weisenden Seite weist das Keilelement 9 eine zu der Umfangskontur 14 der Rampe 8 formschlüssige Gegenkontur 19 auf. Somit ist die Gegenkontur der Flächen 16a, b, c, d der beiden Teil-Keilelemente 9a, 9b kreissegmentförmig begrenzt, insbesondere ist beispielsweise die Fläche 16a zu der Rampe 8a formschlüssig.

In der in Fig. 1b dargestellten Ruhestellung des Keilelementes 9 bildet die Gegenkontur 19 des Keilelementes 9 mit der Umfangskontur 14 der Rampe den Spalt 10 aus, so dass sich der erste Lagerring 1 bezüglich des zweiten Lagerrings 2 ungebremst um die Lagerachse 3 dreht.

Zur Betätigung des Keilelementes 9 sind an dem Schaltteller 11 Griffe 20 angeordnet, die beispielsweise mechanisch betätigt werden können und eine Drehung des Schalttellers 11 um die Lagerachse 3 bewirken, so dass beide Teil-Keilelemente 9a, 9b mit zwei der vier Rampen 8 in Kontakt kommen, wobei der Spalt 10 zwischen den Rampen 8 und dem Keilelement 9 überbrückt wird.

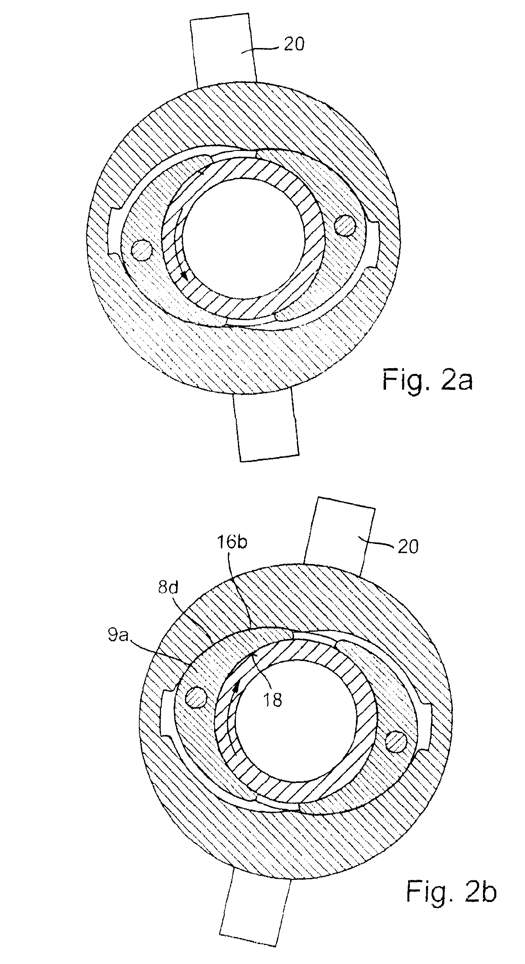

Fig. 2a zeigt das Lager aus Fig. 1a, b in einer ersten betätigten Stellung des Keilelementes 9. Durch Betätigen der Griffe 20 ist der Schaltteller 11 um einen geringen Winkel von ca. 20° verschwenkt worden, so dass der zweite Flächenabschnitt 16b des ersten Teil-Keilelementes 9a mit der Rampe 8d an dem zweiten Lagerring 2 in flächige Berührung gerät und die Teilkontur 18 des Keilelementes 9 an die äußere Mantelfläche des ersten Lagerrings 1 gedrückt wird, wodurch eine im wesentlichen radial wirkende Bremskraft entsteht, die den Lagerring 1 in der Drehrichtung gemäß dem Pfeil 21 abbremst und ggf. stillsetzt. Zugleich wirkt der zweite Flächenabschnitt 16d des zweiten Teil-Keilelementes 9b mit der Rampe 8c zusammen, so dass die Krafteinwirkung bei der Abbremsung des ersten Lagerrings 1 die Lagerachse 3 radial kreuzt.

Fig. 2b zeigt das Lager aus Fig. 1a, b und Fig. 2a in einer zweiten betätigten Stellung, wobei durch Drehen der Griffe 20 des Schalttellers 11 das Keilelement 9 so verschwenkt wurde, dass der erste Flächenabschnitt 16a des ersten Teil-Keilelementes 9a mit der Rampe 8a und der erste Flächenabschnitt 16c des zweiten Teil-Keilelementes 9b mit der Rampe 8b flächig zusammenwirkt.

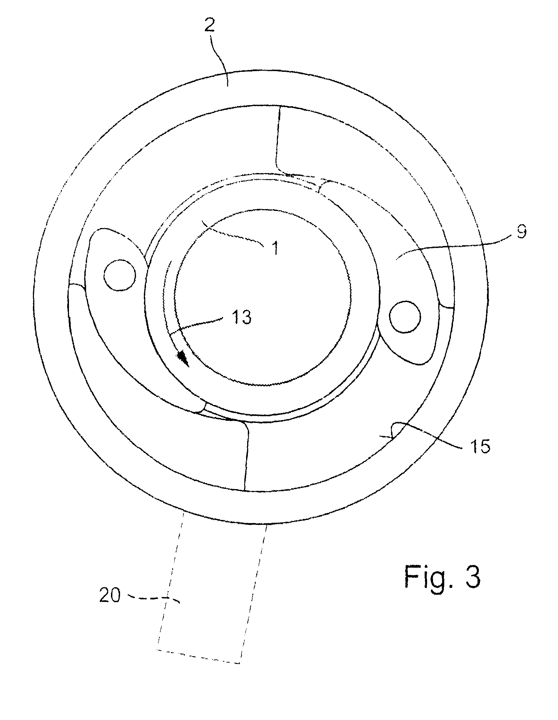

Fig. 3 zeigt eine Abwandlung zu dem in Fig. 1 und 2 dargestellten Ausführungsbeispiel, bei der ein Bremsen des ersten Lagerringes 1 nur in Drehrichtung des Pfeils 13 um die Lagerachse vorgesehen ist. Hierzu sind an dem zweiten Lagerring 2 nur zwei Rampen 8 vorgesehen, die in Umfangsrichtung der inneren Mantelfläche 15 um ca. 180° versetzt angeordnet sind. Die beiden Rampen 8 wirken mit zwei Keilelementen 9 zusammen, deren Gegenkontur 19 jeweils formschlüssig zu der Umfangskontur 14 der Rampe 8.

Bei dem vorstehend beschriebenen Ausführungsbeispiel ist im Bereich des Flächenkontaktes zwischen dem Keilelement 9 und der Rampe 8 eine Beschichtung an mindestens einer der beiden Kontaktflächen vorgesehen, die einen Verschleiß vermindert und ggf. eine Wärmeabfuhr begünstigt.

Bei dem oben beschriebenen Ausführungsbeispiel war die Betätigung des Schalttellers 11 mittels Griffen 20 vorgesehen. Es versteht sich, dass der Schaltteller 11 auch elektronisch oder elektromechanisch bzw. elektromagnetisch oder mechanisch mittels eines Hebelsystems betätigbar sein kann. Weiter kann vorgesehen sein, dass der Schaltteller mittels der Fliehkraft ausgelöst werden kann, insbesondere, wenn bei hohen Drehzahlen des ersten Lagerrings 1 aufgrund des Kontaktes der äußeren Mantelfläche des ersten Lagerrings 1 mit der Teilkontur 18 des Keilelementes 9 des Keilelement 9 bei der Drehung soweit mitgenommen wird, wodurch das Keilelement 9 den Spalt 10 zu der Rampe 8 überbrückt. Hierzu ist eine bei hohen Drehzahlen wirksame bzw. wirksam werdende reibschlüssige Verbindung zwischen der Teilkontur 18 des Keilelementes 9 bzw. der Teil-Keilelemente 9a, 9b und der äußeren Mantelfläche des ersten Lagerrings 1 vorgesehen.

Bei dem vorstehend beschriebenen Ausführungsbeispiel war der erste Lagerring 1 als feststehender Außenring und der zweite Lagerring 2 als drehender Innenring eines Wälzlagers ausgebildet. Es versteht sich, dass der erste Lagerring 1 feststehend und der zweite Lagerring 2 drehbar ausgebildet sein kann. Es versteht sich ferner, dass das Lager auch als Gleitlager ausgebildet sein kann.

Bei dem vorstehend beschriebenen Ausführungsbeispiel war die Gegenkontur der Flächenabschnitte 16a, b, c, d des Keilelementes 9 bzw. der Teil-Keilelemente 9a, 9b in axialer Richtung im wesentlichen eben und die zu der Umfangskontur 14 der Rampe 8 ausgebildete Gegenkontur nur in Umfangsrichtung ausgebildet, so dass in der Querschnittsansicht von Fig. 1a die Flächenabschnitte 16a, b, c, d im Bereich der Gegenkontur als gerade Linien erscheinen. Es versteht sich, dass die Gegenkontur auch eine axial sich erstreckende Profilierung aufweisen kann, die zusätzlich zu der in Umfangsrichtung sich erstreckenden Gegenkontur 19 vorgesehen sein kann. Das Keilelement 9 bzw. die Teil-Keilelemente 9a, b können auch eine axiale Profilierung aufweisen, wobei das Keilelement 9 bzw. die Teil-Keilelemente 9a, b axial mittig eine Ausbauchung in Richtung auf die Rampe 8 aufweist, und die Rampe 8 entsprechend eine Hohlkehle aufweist, in der die Ausbauchung aufgenommen ist. Auf diese Weise erhöht sich die Kontaktfläche zwischen der Rampe 8 und dem Keilelement 9 bzw. den Teil-Keilelementen 9a, b.

### Bezugszeichenliste

- 1: erster Lagerring
- 2: zweiter Lagerring
- 3: Lagerachse
- 4: Lagerabschnitt
- 5: Bremsabschnitt
- 6: Wälzkörper
- 7: Dichtelement
- 8: Rampe
- 9: Keilelement
- 10: Spalt
- 11: Schaltteller
- 12: Tellerteil
- 13: Pfeil (Drehrichtung)
- 14: Umfangskontur
- 15: innere Mantelfläche des zweiten Lagerrings 2
- 16a, b: Flächenabschnitte des ersten Teil-Keilelementes 9a
- 16c, d: Flächenabschnitte des zweiten Teil-Keilelementes 9b
- 17: Fläche des Keilelementes 9
- 18: Teilkontur des Keilelementes 9
- 19: Gegenkontur des Keilelementes 9
- 20: Griff
- 21: Pfeil (Drehrichtung)

## Patentansprüche

1. Bremsbares Lager, umfassend
einen ersten Lagerring (1),
einen zweiten Lagerring (2), der konzentrisch zu dem ersten Lagerring (1) um eine gemeinsame Lagerachse (3) angeordnet ist, **gekennzeichnet durch**
eine Rampe (8, 8a, 8b, 8c, 8d) an dem zweiten Lagerring (2), die in Richtung auf den ersten Lagerring (1) mindestens abschnittsweise vorsteht, und
ein betätigbares Keilelement (9, 9a, 9b), das zwischen die Rampe (8, 8a, 8b, 8c, 8d) und den ersten Lagerring (1) bringbar ist, und das in der betätigten Stellung einen Spalt (10) zwischen der Rampe (8, 8a,m 8b, 8c, 8d) und dem ersten Lagerring (1) überbrückt.

2. Lager nach Anspruch 1, **dadurch gekennzeichnet, dass** das Keilelement (9, 9a, 9b) an einem Schaltteller (11) angeordnet ist, und dass der Schaltteller (11) um die Lagerachse (3) drehbar gelagert ist.

3. Lager nach Anspruch 2, **dadurch gekennzeichnet, dass** das Keilelement (9, 9a, 9b) von einem Tellerteil (12) des Schalttellers (11) in Richtung der Lagerachse (3) absteht.

4. Lager nach einem der Ansprüche 1 bis 3, **dadurch gekennzeichnet, dass** das Keilelement (9, 9a, 9b) an einer zu dem ersten Lagerring (1) weisenden Fläche (17) eine abschnittsweise hohlzylindrische Teilkontur (18) aufweist.

5. Lager nach einem der Ansprüche 1 bis 4, **dadurch gekennzeichnet, dass** das Keilelement (9, 9a, 9b) eine abschnittsweise zu einer Umfangskontur (14) der Rampe (8, 8a, 8b, 8c, 8d) formschlüssige Gegenkontur (19) aufweist.

6. Lager nach einem der Ansprüche 1 bis 5, **dadurch gekennzeichnet, dass** ein Keilwinkel der Rampe (8, 8a, 8b) im Umfangsrichtung (Pfeil 13) des zweiten Lagerrings (2) zunimmt.

7. Lager nach einem der Ansprüche 1 bis 6, **dadurch gekennzeichnet, dass** die Rampe (8, 8a, 8b, 8c, 8d) abschnittsweise eine kreisbogensegmentförmige Umfangskontur (14) aufweist.

8. Lager nach einem der Ansprüche 1 bis 7, **dadurch gekennzeichnet, dass** die Rampe (8, 8a, 8b, 8c, 8d) einteilig mit dem zweiten Lagerring (2) ausgebildet ist.

9. Lager nach einem der Ansprüche 1 bis 8, weiter umfassend ein Dichtelement (7) sowie Wälzkörper (6), wobei das Dichtelement (7) zwischen dem Keilelement (9) und den Wälzkörpern (6) angeordnet ist.

## Claims

1. Bearing capable of being braked, comprising
a first bearing ring (1),
a second bearing ring (2) which is arranged concentrically to the first bearing ring (1) about a common bearing axis (3),
**characterized by**
a ramp (8, 8a, 8b, 8c, 8d) on the second bearing ring (2), the said ramp projecting at least partially in the direction of the first bearing ring (1), and
an actuable wedge element (9, 9a, 9b) which can be brought between the ramp (8, 8a, 8b, 8c, 8d) and the first bearing ring (1) and which, in the actuated position, bridges a gap (10) between the ramp (8, 8a, 8b, 8c, 8d) and the first bearing ring (1).

2. Bearing according to Claim 1, **characterized in that** the wedge element (9, 9a, 9b) is arranged on an indexing plate (11), and **in that** the indexing plate (11) is mounted rotatably about the bearing axis (3).

3. Bearing according to Claim 2, **characterized in that** the wedge element (9, 9a, 9b) projects from a plate part (12) of the indexing plate (11) in the direction of the bearing axis (3).

4. Bearing according to one of Claims 1 to 3, **characterized in that** the wedge element (9, 9a, 9b) has a partially hollow-cylindrical subcontour (18) on a surface (17) printing towards the first bearing ring (1).

5. Bearing according to one or Claims 1 to 4, **characterized in that** the wedge element (9, 9a, 9b) has a mating contour (19) which partially makes a form fit with a circumferential contour (14) of the ramp (8, 8a, 8b, 8c, 8d).

6. Bearing according to one of Claims 1 to 5, **characterized in that** a wedge angle of the ramp (8, 8a, 8b) increases in the circumferential direction (arrow 13) of the second bearing ring (2).

7. Bearing according to one of Claims 1 to 6, **characterized in that** the ramp (8, 8a, 8b, 8c, 8d) has partially a circumferential contour (14) in the form of a segment of an auricular circle.

8. Bearing according to one of Claims 1 to 7, characterise in that the ramp (8, 8a, 8b, 8c, 8d) is formed in one part with the second bearing ring (2).

9. Bearing according to one of Claims 1 to 8, further comprising a sealing element (7) and rolling bodies (6), the sealing element (7) being arranged between the wedge element (9) and the rolling bodies (6).

## Revendications

1. Palier freinable, comportant
une première bague de palier (1),
une deuxième bague de palier (2) qui est disposée de manière concentrique à la première bague de palier (1) autour d'un axe de palier commun (3),
**caractérisé par**
une rampe (8, 8a, 8b, 8c, 8d) sur la deuxième bague de palier (2), laquelle fait saillie au moins en partie en direction de la première bague de palier (1) et
un élément de coin pouvant être actionné (9, 9a, 9b) qui peut être amené entre la rampe (8, 8a, 8b, 8c, 8d) et la première bague de palier (1) et qui, dans la position actionnée, comble un interstice (10) entre la rampe (8, 8a, 8b, 8c, 8d) et la première bague de palier (1).

2. Palier selon la revendication 1, **caractérisé en ce que** l'élément de coin (9, 9a, 9b) est disposé sur un plateau de commutation (11), et **en ce que** le plateau de commutation (11) est monté de manière à pouvoir tourner autour de l'axe de palier (3).

3. Palier selon la revendication 2, **caractérisé en ce que** l'élément de coin (9, 9a, 9b) fait saillie à partir d'une partie de plateau (12) du plateau de commutation (11) en direction de l'axe de palier (3).

4. Palier selon l'une quelconque des revendications 1 à 3, **caractérisé en ce que** l'élément de coin (9, 9a, 9b) présente, sur une surface (17) tournée vers la première bague de palier (1), un contour partiel (18) en partie cylindrique creux.

5. Palier selon l'une quelconque des revendications 1 à 4, **caractérisé en ce que** l'élément de coin (9, 9a, 9b) présente un contour conjugué (19) en partie en engagement par complémentarité de formes avec un contour périphérique (14) de la rampe (8, 8a, 8b, 8c, 8d).

6. Palier selon l'une quelconque des revendications 1 à 5, **caractérisé en ce qu'**un angle de coin de la rampe (8, 8a, 8b) augmente dans la direction périphérique (flèche 13) de la deuxième bague de palier (2).

7. Palier selon l'une quelconque des revendications 1 à 6, **caractérisé en ce que** la rampe (8, 8a, 8b, 8c, 8d) présente en partie un contour périphérique (14) en forme de segment en arc de cercle.

8. Palier selon l'une quelconque des revendications 1 à 7, **caractérisé en ce que** la rampe (8, 8a, 8b, 8c, 8d) est réalisée d'une seule pièce avec la deuxième bague de palier (2).

9. Palier selon l'une quelconque des revendications 1 à 8, comportant en outre un élément d'étanchéité (7) ainsi que des corps de roulement (6), l'élément d'étanchéité (7) étant disposé entre l'élément de coin (9) et les corps de roulement (6).
